# DEMANDE DE BREVET EUROPEEN

(11) **EP 4 786 333 A1**
(43) Date de publication de la demande: **05.08.2026**
(21) Numéro de dépôt: 25219257.0
(22) Date de dépôt: 28.11.2025
(51) Int. Cl.: B64C 13/04, B64C 13/12, B64C 13/50, B64C 27/06, B64C 27/56

(54) **AÉRONEF MUNI D'UN SYSTÈME DE COMMANDE DE VOL ÉLECTRIQUE MODULAIRE**

(30) Priorité: 04.02.2025 FR 2501114
(71) Demandeur: Airbus Helicopters, 13725 Marignane Cedex (FR)
(72) Inventeur: LETONNELIER, Clément, 13580 LA FARE LES OLIVIERS (FR); LAUBY, Constance, 13290 AIX-EN-PROVENCE (FR); OTT, Adrien, 13300 SALON DE PROVENCE (FR); IZZO, Pascal, 13130 BERRE L'ETANG (FR)
(74) Mandataire: GPI Brevets

(57) **Abrégé**

La présente invention concerne un giravion (1) comportant un premier ensemble de connecteurs (20) et un deuxième ensemble de connecteurs (25) reliés à un système (70) de contrôle. Le système (70) de contrôle détermine, lors d'une phase d'initialisation), une configuration courante parmi des configurations de référence en communiquant au travers du premier ensemble de connecteurs (20) et du deuxième ensemble de connecteurs (25), lesdites plusieurs configurations de référence comprenant : i) une configuration bi-pilote (CONF1) dans laquelle deux jeux d'interfaçage homme-machine complets (45) identiques sont branchés respectivement au premier ensemble de connecteurs (20) et au deuxième ensemble de connecteurs (25), et ii) au moins une configuration simplifiée dans laquelle un seul jeu d'interfaçage homme-machine complet (45) est branché à un des premier ensemble de connecteurs (20) et deuxième ensemble de connecteurs (25).

## Description

La présente invention concerne un aéronef muni d'un système de commande de vol électrique modulaire.

Un aéronef comporte de manière classique des organes de commande manœuvrables par un pilote ou un copilote, et agissant sur des gouvernes aérodynamiques pour diriger cet aéronef.

Ainsi, un giravion peut être muni d'au moins un rotor principal participant à sa sustentation voire à sa propulsion. Un giravion peut également être équipé d'un dispositif permettant de commander ses mouvements selon un axe de lacet. Par exemple, le dispositif anticouple comporte au moins un rotor annexe, éventuellement de petite taille et à axe de rotation quasiment horizontal. Un tel rotor annexe peut comprendre par exemple un rotor standard, un rotor caréné, voire une hélice. Les pales des divers rotors représentent ainsi des gouvernes aérodynamiques pilotables pour diriger le giravion.

Dès lors, un giravion comporte classiquement un poste de pilotage logeant au moins un jeu d'interfaçage homme-machine pour agir sur le pas des pales des rotors. Un tel jeu d'interfaçage homme-machine comprend un premier organe de commande, tel un levier dit usuellement « levier de pas collectif ». De plus, le jeu d'interfaçage homme-machine comprend un deuxième organe de commande, tel un levier dit usuellement « levier de pas cyclique ». Enfin, le jeu d'interfaçage homme-machine comporte un troisième organe de commande, tel un palonnier, pour faire varier le pas des pales du rotor annexe.

Dans le cas d'un giravion à commandes de vol électriques, chaque organe de commande est associé à un boîtier de commande. Ainsi, chaque commande de pilotage générée par la sollicitation d'un organe de commande est transmise sous la forme d'un signal électrique émis par un boîtier de commande. Par exemple, ce signal électrique est fonction de l'amplitude et de la direction d'un mouvement opérés par un organe de commande, ou de la manœuvre d'un bouton de l'organe de commande.

Le boîtier de commande est relié, par une liaison filaire par exemple, à un système de contrôle configuré pour piloter une position de chaque gouverne aérodynamique. Un tel système de contrôle peut comprendre un sous-ensemble de traitement déterminant une consigne positionnelle à atteindre par une ou des gouvernes aérodynamiques en fonction d'au moins une commande de pilotage encodée par un boîtier de commande et de l'état situationnel courant de l'aéronef. Une telle consigne positionnelle peut être un angle de pas d'une pale, un angle de déflection d'un volet ou encore une vitesse de rotation d'un rotor ou d'une hélice par exemple. Enfin, le système de contrôle comporte au moins un sous-ensemble d'actionnement commandant un actionneur agissant directement ou indirectement sur une ou plusieurs gouvernes aérodynamiques en fonction d'une consigne positionnelle déterminée par le sous-ensemble de traitement.

Un aéronef peut comporter un seul jeu d'interfaçage homme-machine pilote.

Un autre type de giravion dit « aéronef bi-pilote » peut comprendre un pilote et un copilote assis l'un à côté de l'autre dans une configuration bi-pilote. L'aéronef comporte alors un jeu d'interfaçage homme-machine destiné au pilote et un jeu d'interfaçage homme-machine destiné au copilote dénommé respectivement par la suite « jeu d'interfaçage homme-machine pilote » et « jeu d'interfaçage homme-machine copilote ». Les organes de commandes des jeux d'interfaçage homme-machine pilote et co-pilote de chaque type sont reliés mécaniquement pour procurer aux pilotes une adéquation de positions des organes de commande. Les contraintes réglementaires en ce qui concerne la présence obligatoire du copilote varient en fonction de la catégorie de l'aéronef, et en particulier du nombre maximum de passagers. Par exemple, les aéronefs bi-pilote embarquant entre 9 et 18 passagers peuvent être opérés par un seul pilote en conditions de vol « à vue ». A contrario, les aéronefs bi-pilote embarquant plus de 18 passagers sont dans l'obligation d'être opérés par deux pilotes. De nombreux opérateurs choisissent donc un aéronef ayant une configuration bi-pilote et opèrent les aéronefs soit en mono-pilote soit en bi-pilote selon les missions.

Dans ce contexte, le document FR3005032 décrit un poste de pilotage symétrique d'un giravion, comportant des sièges disposés côte à côte et des portes latérales d'accès.

Le document US 2019/0161170 A1 décrit un système de pilotage comprenant un manche de commande central à deux poignées et deux leviers disposés respectivement sur des consoles latérales.

Le document US 2022/0266983 A1 décrit un système informatique de contrôle de vol configuré pour contrôler un aéronef, dans un mode de contrôle primaire, à l'aide de signaux générés par un ensemble capteur primaire en réponse à des mouvements de pivotement d'un élément de commande primaire. Dans un mode de contrôle secondaire, le système informatique de contrôle de vol est configuré pour contrôler l'aéronef à l'aide de signaux générés par un ensemble capteur secondaire en réponse à des mouvements de pivotement d'un élément de commande secondaire.

Le document US 2024/0010331 A1 décrit un aéronef muni d'un système de commande mécanique muni d'un poste de pilotage d'un pilote ayant une première poignée principale et une première poignée secondaire coulissant dans un canal d'un accoudoir pour commander respectivement cycliquement et collectivement le pas de pales. Une deuxième poignée principale et une deuxième poignée secondaire peuvent équiper un poste de pilotage d'un copilote. Toutes les poignées sont en liaison mécanique avec une chaine mécanique de commande de vol.

Le document WO2004/110860 A1 un hélicoptère muni d'un module avant connectable à un module central qui est commun à toutes les missions et contient les organes essentiels de vol. Ce module principal comporte notamment la motorisation, les éléments de commande de vol, la voilure tournante, une poutre de queue, un atterrisseur, des systèmes électriques.

La présente invention a alors pour objet de proposer un aéronef innovant muni d'un système de commande de vol modulaire.

L'invention concerne un giravion comportant un système de commande de vol électrique, le système de commande de vol électrique comprenant un système de contrôle pour contrôler au moins une gouverne aérodynamique en fonction d'au moins une commande.

Le système de commande de vol électrique comporte un premier ensemble de connecteurs et un deuxième ensemble de connecteurs raccordés au système de contrôle par au moins une liaison filaire, événtuellement électrique ou optique. Au moins un jeu d'interfaçage homme-machine est branché de manière réversible soit au premier ensemble de connecteurs soit au deuxième ensemble de connecteurs, le jeu d'interfaçage homme-machine comprenant au moins un organe de commande muni d'un boitier de commande configuré pour générer ladite commande suite à une sollicitation de l'organe de commande. Ledit giravion a, durant chaque vol, une configuration courante choisie parmi plusieurs configurations de référence ; le système de contrôle déterminant, lors d'une phase d'initialisation, la configuration courante parmi les configurations de référence en communiquant au travers du premier ensemble de connecteurs et du deuxième ensemble de connecteurs, lesdites plusieurs configurations de référence comprenant:
- une configuration bi-pilote dans laquelle deux jeux d'interfaçage homme-machine complets identiques sont branchés respectivement au premier ensemble de connecteurs et au deuxième ensemble de connecteurs, et
- au moins une configuration simplifiée dans laquelle un seul jeu d'interfaçage homme-machine complet est branché à un des premier ensemble de connecteurs et deuxième ensemble de connecteurs.

Le giravion comporte deux ensembles de connecteurs pouvant être branchés respectivement à deux jeux d'interfaçage homme-machine. Chaque ensemble de connecteurs comprend un ou plusieurs connecteurs reliés par une ou des liaisons filaires au système de contrôle. Une telle liaison filaire peut prendre la forme d'un harnais électrique et/ou optique par exemple. Le ou les boitiers de commande du jeu d'interfaçage homme-machine à brancher sont raccordés par au moins une liaison filaire à au moins un connecteur soit du premier ensemble de connecteurs soit du deuxième ensemble de connecteurs, l'ensemble de connecteurs concerné ayant pour fonction d'acquérir ladite au moins une commande et de la transmettre au système de contrôle.

Chaque jeu d'interfaçage homme-machine peut comporter un ou plusieurs organes de commande. L'expression « jeu d'interfaçage homme-machine complet » désigne un jeu d'interfaçage homme-machine particulier comprenant le maximum d'organes de commande possible, contrairement à un jeu simplifié décrit par la suite qui comporte moins d'organes de commande voire un seul organe de commande. Eventuellement, un organe de commande peut être raccordé à plusieurs connecteurs d'un même ensemble de connecteurs.

Ainsi, lors d'une phase préparatoire un opérateur peut choisir, en fonction de la mission à réaliser, d'installer un ou deux jeux d'interfaçage homme-machine, afin de placer l'aéronef dans une configuration mono-pilote ou bi-pilote, voire dans une configuration intermédiaire décrite par la suite. Pour passer d'une configuration à une autre, il suffit de fixer à l'aéronef les organes de commande concernés et de les brancher, à savoir de les raccorder, à un ou des connecteurs, soit directement via leur propre câblage soit indirectement via au moins une liaison filaire d'adaptation par exemple. Les connexions mécaniques permettant de fixer les organes de commande peuvent être identiques et peuvent comprendre un système de montage/démontage rapide. Par ailleurs, l'invention peut permettre de mettre en œuvre des liaisons entre les connecteurs et le système de contrôle avec un nombre/définition de signaux d'interconnexions standardisés, et notamment des liaisons identiques d'un aéronef à un autre.

Le système de contrôle est alors configuré pour détecter la configuration courante, et pour se paramétrer en fonction de cette configuration courante. Le système de contrôle peut appliquer des lois de pilotage qui varient en fonction de la configuration courante.

Cette architecture représente un changement de concept permettant la mise en place de deux postes de pilotage totalement indépendants entre deux zones d'un cockpit de l'aéronef, ce qui peut apporter un avantage substantiel en termes de confort. En configuration mono-pilote, il est notamment possible d'agencer un unique jeu d'interfaçage homme-machine dans une zone ce qui permet de libérer de l'espace dans l'autre zone du cockpit par exemple.

L'indépendance des postes de pilotage permet de proposer une solution de cockpit pour giravion à commandes de vol électriques versatile autorisant en quelques minutes le changement de configurations parmi des configuration préétablies. Le basculement entre ces configurations de postes de pilotage offre la possibilité appréciable d'être réalisé directement chez l'opérateur du giravion, et donc sans avoir à solliciter un centre de maintenance. Un opérateur peut alors adapter la configuration de l'aéronef en fonction de la mission à réaliser, avec une immobilisation minimale.

En raison de la versatilité introduite, cette architecture peut permettre également d'intervertir deux organes de commande au niveau d'un poste de pilotage, indépendamment de l'autre poste de pilotage. Par exemple un poste de pilotage peut comprendre deux sous-ensembles de connecteurs latéralement de part et d'autre d'un siège, un même organe de commande pouvant être agencé à droite ou à gauche du siège selon la préférence du pilote ou du co-pilote.

Le giravion peut de plus comporter une ou plusieurs des caractéristiques qui suivent.

Selon une possibilité, le ou les jeux d'interfaçage homme-machine complets peuvent comprendre chacun un premier organe de commande pour contrôler un pas de pales d'un rotor principal, ainsi qu'un deuxième organe de commande pour contrôler ledit pas des pales du rotor principal différemment que le premier organe de commande et un troisième organe de commande pour piloter un pas de pales d'un rotor annexe.

Selon une alternative usuelle, le premier organe de commande peut prendre la forme d'un manche pilotant le pas des pales du rotor principal pour incliner le vecteur portance, et le deuxième organe de commande peut prendre la forme d'un levier pilotant le pas des pales du rotor principal pour piloter la norme du vecteur portance.

Selon une alternative de pilotage par objectif, le premier organe de commande et le deuxième organe de commande peuvent établir des consignes, par exemple une consigne de vitesse et une consigne de cap ou d'assiette, le système de contrôle pilotant le pas des pales du rotor principal et du rotor annexe pour atteindre cet objectif.

Selon une possibilité compatible avec les précédentes, ladite au moins une configuration simplifiée peut comporter une configuration strictement mono-pilote comprenant uniquement un jeu d'interfaçage homme-machine complet branché au premier ensemble de connecteurs ou au deuxième ensemble de connecteurs.

Dans la configuration strictement mono-pilote, le poste co-pilote est supprimé. Cette configuration permet d'obtenir un gain de masse par rapport à la configuration bi-pilote voire surtout un possible réaménagement de la zone concernée du cockpit.

Selon une possibilité compatible avec les précédentes, ladite au moins une configuration simplifiée peut comporter une configuration intermédiaire ayant un jeu d'interfaçage homme-machine complet branché à un des premier ensemble de connecteurs et deuxième ensemble de connecteurs, et un jeu d'interfaçage homme-machine simplifié branché au premier ensemble de connecteurs ou au deuxième ensemble de connecteurs qui n'est pas branché au jeu d'interfaçage homme-machine complet.

Le jeu d'interfaçage homme-machine simplifié comprend moins d'organes de commande qu'un jeu d'interfaçage homme-machine complet.

Par exemple, le jeu d'interfaçage homme-machine simplifié comprend uniquement un organe de commande.

Dans ce cas, cet organe de commande peut être configuré pour piloter un angle de roulis, un angle de tangage, un angle de lacet et une vitesse de l'aéronef.

Dans la configuration simplifiée, un poste de pilotage est un poste pilote classique, et l'autre poste est un poste complémentaire. Le poste complémentaire est drastiquement simplifié et composé par exemple d'un unique manche quatre axes, intégrant son boîtier de commande pour acquérir les commandes. Avec une telle interface, le pilotage de l'aéronef se retrouve facilité et permet, en cas d'indisponibilité du poste pilote (panne, problème avec le pilote, ...), le pilotage par un co-pilote ou opérateur ayant un niveau de qualification moindre.

Le manche quatre axes peut être localisé d'un côté extérieur de l'aéronef pour faciliter l'intégration d'autres équipements au niveau d'une console centrale.

Selon une possibilité compatible avec les précédentes, le système de contrôle peut comprendre un sous-ensemble de traitement déterminant au moins une consigne positionnelle à atteindre par au moins une gouverne aérodynamique en fonction au moins d'une commande, le système de contrôle comprenant au moins un sous-ensemble d'actionnement configuré pour générer en fonction de ladite consigne positionnelle au moins une consigne d'actionnement qui est transmise à au moins un actionneur pour piloter une dite gouverne aérodynamique, le sous-ensemble de traitement étant relié au premier ensemble de connecteurs et au deuxième ensemble de connecteurs et étant configuré pour déterminer la configuration courante en fonction d'informations reçues par chaque connecteur des premier ensemble de connecteurs et deuxième ensemble de connecteurs.

Le sous-ensemble de traitement peut déterminer de manière usuelle quel organe de commande est raccordé à quel connecteur par le biais d'une méthode d'adressage usuelle.

Le sous-ensemble de traitement peut être configuré pour choisir une loi de pilotage à appliquer en fonction de la configuration courante, voire du jeu d'interfaçage homme-machine transmettant une commande. Par exemple, dans la configuration intermédiaire, le sous-ensemble de traitement peut appliquer un premier ensemble de lois mémorisé quand un organe de commande du jeu d'interfaçage homme-machine complet émet une commande, et un deuxième ensemble de lois lorsque l'unique organe de commande du jeu d'interfaçage homme-machine simplifié émet une commande.

Selon une possibilité compatible avec les précédentes, ledit giravion peut comporter un afficheur, le système de contrôle étant configuré pour transmettre au moins un signal porteur de la configuration courante directement ou indirectement à l'afficheur, ledit afficheur affichant au moins un symbole porteur de la configuration courante.

Un équipage peut ainsi vérifier visuellement la configuration de l'aéronef.

Selon une possibilité compatible avec les précédentes, dans la configuration bi-pilote, chaque jeu d'interfaçage homme-machine complet peut comporter un interrupteur, ledit interrupteur inhibant le jeu d'interfaçage homme-machine complet en cas d'activation de cet interrupteur.

Il est ainsi possible de passiver un jeu d'interfaçage homme-machine complet, sans avoir à changer la configuration.

Selon une possibilité compatible avec les précédentes, dans la configuration bi-pilote, deux organes de commande exerçant la même fonction respectivement des deux jeux d'interfaçage homme-machine complets peuvent être des organes passifs avec retour dans une position prédéterminée en l'absence d'effort, le système de contrôle étant configuré pour inhiber un des deux organes de commande si les deux organes de commande sont manœuvrés en même temps.

Lorsqu'un organe de commande n'est pas manœuvré, cet organe de commande revient dans une position de référence. Afin de faciliter le changement entre les configurations, cette caractéristique permet d'éviter l'agencement d'un dispositif mécanique entre les organes de commande de deux jeux d'interfaçage homme-machine.

Alternativement, dans la configuration bi-pilote, deux organes de commande exerçant la même fonction respectivement des deux jeux d'interfaçage homme-machine complets peuvent être des organes actifs ; et lorsqu'un des deux organes de commande est déplacé alors le système de contrôle peut être configuré pour transmettre un signal vers l'autre organe de commande pour commander un déplacement identique.

L'usage de deux jeux d'interfaçage homme-machine complets actifs permet de faciliter le changement entre les configurations, cette caractéristique permettant d'éviter l'agencement d'un dispositif mécanique entre les organes de commande de deux jeux d'interfaçage homme-machine.

Selon une possibilité compatible avec les précédentes, le premier ensemble de connecteurs et le deuxième ensemble de connecteurs peuvent être situés latéralement de part et d'autre d'un plan vertical allant d'un nez vers une queue du giravion.

Dans un giravion classique, le premier ensemble de connecteurs et le deuxième ensemble de connecteurs sont situés, par exemple, à gauche et à droite du cockpit selon le sens d'avancement de l'aéronef.

L'invention vise en outre le procédé mis en œuvre par un tel giravion.

Ainsi, l'invention vise un procédé de contrôle d'un giravion comportant un système de commande de vol électrique, le système de commande de vol électrique comprenant un système de contrôle pour contrôler au moins une gouverne aérodynamique en fonction d'au moins une commande.

Le système de commande de vol électrique comportant un premier ensemble de connecteurs et un deuxième ensemble de connecteurs reliés au système de contrôle par au moins une liaison filaire, le procédé comporte :
- connexion/raccordement d'un seul jeu d'interfaçage homme-machine au premier ensemble de connecteurs ou au deuxième ensemble de connecteurs, ou de deux jeux d'interfaçage homme-machine respectivement au premier ensemble de connecteurs et au deuxième ensemble de connecteurs,
- identification avec le système de contrôle, lors d'une phase d'initialisation, d'une configuration courante parmi plusieurs configurations de référence en communiquant avec le premier ensemble de connecteurs et le deuxième ensemble de connecteurs, lesdites plusieurs configurations de référence comprenant :
- une configuration bi-pilote dans laquelle deux jeux d'interfaçage homme-machine complets identiques sont branchés respectivement au premier ensemble de connecteurs et au deuxième ensemble de connecteurs, et
- au moins une configuration simplifiée dans laquelle un seul jeu d'interfaçage homme-machine complet est branché à un des premier ensemble de connecteurs et deuxième ensemble de connecteurs.

Ladite au moins une configuration simplifiée peut comporter une configuration strictement mono-pilote comprenant uniquement un jeu d'interfaçage homme-machine complet branché soit au premier ensemble de connecteurs soit au deuxième ensemble de connecteurs.

Ladite au moins une configuration simplifiée peut comporter une configuration intermédiaire ayant un jeu d'interfaçage homme-machine complet branché à un des premier ensemble de connecteurs et deuxième ensemble de connecteurs, et un jeu d'interfaçage homme-machine simplifié branché au premier ensemble de connecteurs ou au deuxième ensemble de connecteurs qui n'est pas branché au jeu d'interfaçage homme-machine complet.

L'invention et ses avantages apparaîtront avec plus de détails dans le cadre de la description qui suit avec des exemples donnés à titre illustratif en référence aux figures annexées qui représentent :
la figure 1, un schéma illustrant un giravion selon l'invention,
la figure 2, un schéma illustrant un système de commande de vol selon l'invention dans la configuration bi-pilote,
la figure 3, un schéma illustrant un système de commande de vol selon l'invention dans la configuration intermédiaire,
la figure 4, un schéma illustrant un système de commande de vol selon l'invention dans la configuration strictement mono-pilote, et
la figure 5, un schéma illustrant le procédé de l'invention.

Les éléments présents dans plusieurs figures distinctes sont affectés d'une seule et même référence.

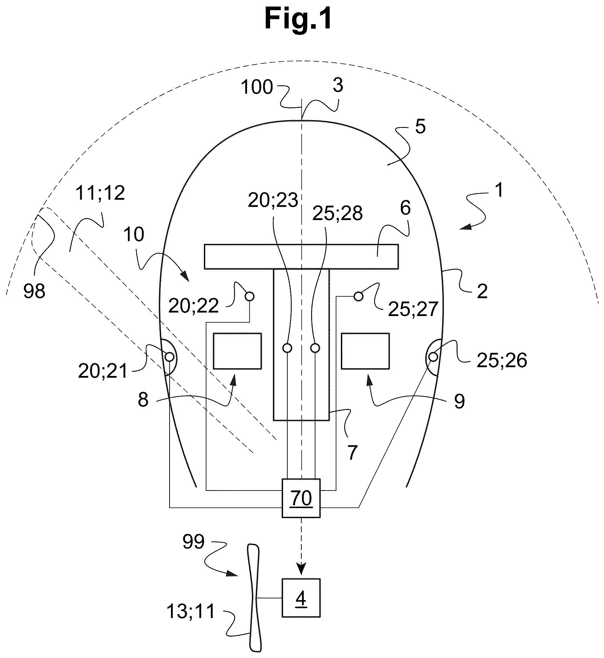

La figure 1 présente un giravion 1 selon l'invention en vue de dessus.

Le giravion 1 comporte une cellule 2 qui s'étend, de l'avant vers l'arrière et le long d'un plan vertical 100, d'un nez 3 à une queue 4.

Le giravion 1 comporte en outre dans la cellule 2 un cockpit 5. Par exemple, le cockpit 5 loge au moins une planche de bord 6 et/ou une console centrale 7.

En particulier, le cockpit 5 peut comprendre deux postes 8, 9 pouvant former chacun un poste de pilotage. Selon l'exemple illustré, les deux postes 8 et 9 sont situés part et d'autre du plan vertical 100, et de part et d'autre de la console centrale 7.

Par ailleurs, le giravion 1 comporte au moins une gouverne aérodynamique 11 mobile pour contrôler les déplacements du giravion 1. Une telle gouverne aérodynamique 11 peut prendre la forme d'une pale, d'un volet, etc.

Par exemple, le giravion 1 comporte un rotor principal 98, ce rotor principal 98 pouvant participer au moins à la sustentation du giravion 1. Le rotor principal 98 comporte alors au moins une pale 12 formant une gouverne aérodynamique 11 et est illustré avec des traits discontinus.

En outre, le giravion 1 peut comporter un rotor annexe 99, ce rotor annexe 99 pouvant participer au moins au contrôle du mouvement en lacet du giravion 1. Le rotor annexe 99 comporte alors au moins une pale 13 formant une gouverne aérodynamique 11. Selon l'exemple illustré, le rotor annexe 99 peut être un rotor arrière situé au niveau de la queue 4 du giravion 1. Selon un autre exemple, un rotor annexe 99 peut prendre la forme d'une hélice.

Indépendamment de ces aspects, le giravion 1 comporte un système 10 de commande de vol électrique. Ce système 10 de commande de vol électrique comprend un système 70 de contrôle pour contrôler au moins une gouverne aérodynamique 11 en fonction d'au moins une commande de pilotage dite plus simplement « commande ».

Dès lors, le système 10 de commande de vol électrique comporte un premier ensemble de connecteurs 20 et un deuxième ensemble de connecteurs 25 reliés/raccordés au système 70 de contrôle, par une ou des liaisons filaires électriques et/ou optiques par exemple. Le premier ensemble de connecteurs 20 et le deuxième ensemble de connecteurs 25 sont éventuellement situés latéralement de part et d'autre du plan vertical 100, voire sont symétriques l'un par rapport à l'autre.

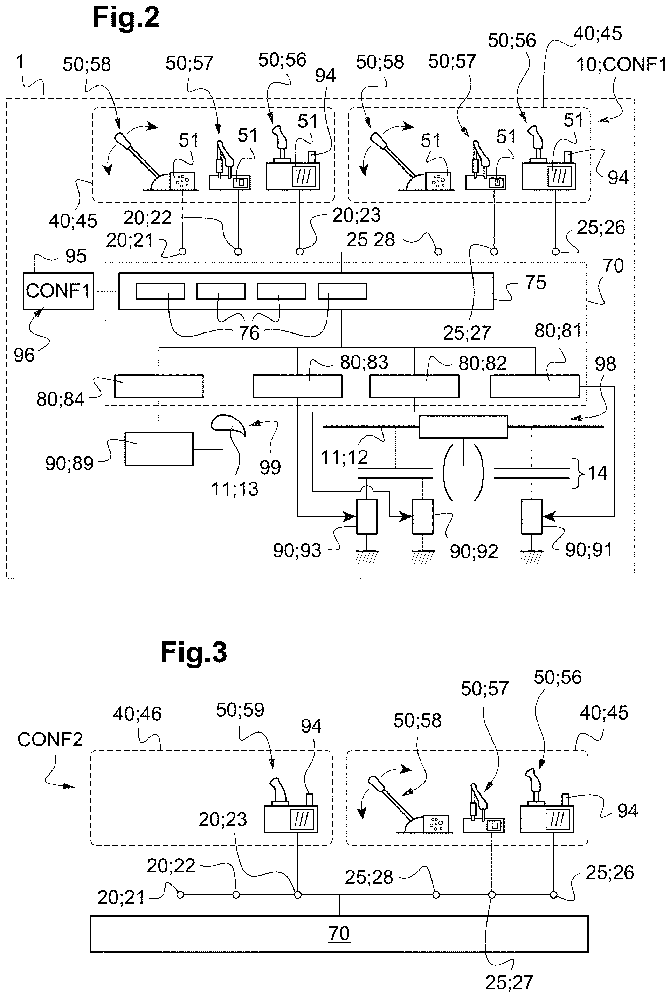

Selon l'exemple de la figure 2, chaque ensemble de connecteurs 20,25 peut comprendre trois sous-ensembles destinés respectivement à trois organes de commande, chaque sous-ensemble pouvant comprendre un ou plusieurs connecteurs. Par simplification et pour ne pas alourdir la figure, le premier ensemble de connecteurs 20 peut comporter trois sous-ensembles ayant chacun au moins un connecteur 21, 22, 23, et le deuxième ensemble de connecteurs 25 peut comporter trois sous-ensembles ayant chacun au moins un connecteur 26, 27, 28. Par exemple, les connecteurs 21, 22, 23, 26, 27, 28 sont identiques.

Chaque ensemble de connecteurs 20,25 a pour fonction d'acquérir au moins une commande, pat exemple sous la forme d'un signal de commande électrique ou optique, et de la transmettre au système 70 de contrôle. Ce système 70 de contrôle est configuré pour contrôler une ou des gouvernes aérodynamiques 11 en fonction de la ou des commandes.

A titre illustratif, le système 70 de contrôle comprend un sous-ensemble de traitement 75 déterminant au moins une consigne positionnelle à atteindre par au moins une gouverne aérodynamique 11 en fonction au moins d'une commande. De manière classique, le sous-ensemble de traitement 75 peut comprendre un ou des calculateurs 76.

Le terme « calculateur » désigne une unité de traitement qui peut effectuer un traitement digital avec un processeur ou d'autres formes de circuit intégré dont des circuits logiques. L'unité de traitement peut effectuer un traitement analogique avec des composants analogiques intégrés ou non dans des circuits intégrés tels, par exemple, des amplificateurs opérationnels. Le terme processeur peut désigner aussi bien une unité centrale de traitement connue sous l'acronyme CPU, une unité graphique de traitement GPU, une unité digitale connue sous l'acronyme DSP, un microcontrôleur, etc.

En outre, le système 70 de contrôle peut comprendre au moins un sous-ensemble d'actionnement 80, configuré pour générer en fonction de ladite consigne positionnelle au moins une consigne d'actionnement qui est transmise à au moins un actionneur 90 pour piloter directement ou indirectement via une chaine mécanique, une gouverne aérodynamique 11.

Dès lors, le sous-ensemble de traitement 75 est relié, par une ou des liaisons filaires illustrées par des traits continus, à chaque connecteur 21-23, 24-26 du premier ensemble de connecteurs 20 et du deuxième ensemble de connecteurs 25. En fonction des commandes reçues, par la liaison filaire, le sous-ensemble de traitement 75 transmet une consigne positionnelle à au moins un sous- ensemble d'actionnement 80, en fonction d'au moins une loi mémorisée, ce sous-ensemble d'actionnement 80 contrôlant au moins un actionneur 90.

Selon l'exemple illustré, le pas des pales 12 du rotor principal 98 peut être modifié par au moins trois servocommandes 91, 92, 93 articulées à un système à plateau cyclique 14 relié à chaque pale 12 par au moins une biellette de pas. Selon ce même exemple, le pas des pales 13 du rotor annexe 99 peut être modifié par au moins un actionneur 89.

Pour générer une commande, à chaque vol, le giravion 1 comporte au moins un jeu d'interfaçage homme-machine 40 branché/raccordé de manière réversible au premier ensemble de connecteurs 20 ou au deuxième ensemble de connecteurs 25.

Chaque jeu d'interfaçage homme-machine 40 comprend au moins un organe 50 de commande muni d'un boitier 51 de commande. La référence 50 désigne n'importe quel organe de commande et la référence 51 désigne n'importe quel boitier de commande.

Le boitier 51 de commande d'un organe 50 de commande est alors raccordé par au moins une liaison filaire à au moins un connecteur 21-23, 24-26 d'un sous-ensemble de connecteur(s). Le boitier 51 de commande d'un organe 50 de commande est configuré pour générer ladite commande à la suite d'une sollicitation de l'organe 50 de commande, à savoir à la suite d'un déplacement de l'organe de commande ou de la manœuvre d'un bouton de l'organe de commande.

En particulier, le giravion 1 se trouve, durant chaque vol, dans une configuration courante choisie parmi plusieurs configurations CONF1, CONF2, CONF3 de référence. Les configurations de référence comprennent une configuration bi-pilote CONF1, et au moins une configuration simplifiée soit strictement mono-pilote, soit intermédiaire.

Le système 70 de contrôle, et selon l'exemple illustré le sous-ensemble de traitement 75, sont alors configurés pour déterminer la configuration courante en fonction d'informations reçues du ou des organes de commande branchés au travers de chaque connecteur des premier ensemble de connecteurs 20 et deuxième ensemble de connecteurs 25. De plus, le système 70 de contrôle, et selon l'exemple illustré le sous-ensemble de traitement 75, sont alors configurés pour contrôler le ou les actionneurs 90 en conséquence.

Eventuellement, le giravion 1 peut comprendre un afficheur 95 contrôlé directement ou indirectement par le système 70 de contrôle. Le système 70 de contrôle, et selon l'exemple illustré le sous-ensemble de traitement 75, sont alors configurés pour transmettre au moins un signal porteur de la configuration courante directement ou indirectement via un système avionique du giravion 1 à l'afficheur 95. Dès lors, l'afficheur 95 affiche au moins un symbole 96 porteur de la configuration courante. Selon l'exemple illustré, le symbole 96 peut prendre la forme d'une suite de caractères désignant la configuration courante.

La figure 2 illustre une configuration bi-pilote CONF1 dans laquelle deux jeux d'interfaçage homme-machine identiques dits jeux d'interfaçage homme-machine complets 45 sont raccordés, directement ou indirectement via une au moins une liaison d'adaptation, respectivement au premier ensemble de connecteurs 20 et au deuxième ensemble de connecteurs 25. La figure 1 illustre des sous-ensembles de connecteur ayant chacun un unique connecteur et donc des organes de commande reliés à un unique connecteur. Selon une autre possibilité, chaque ensemble de connecteurs 20 peut comprendre au moins un sous-ensemble de connecteurs ayant au moins deux connecteurs, et un organe de commande peut être reliés à plusieurs connecteurs d'un même sous-ensemble de connecteurs. Par ailleurs, un connecteur ne peut en outre être branché qu'à un organe de commande.

L'expression « jeu d'interfaçage homme-machine complet 45 » désigne un jeu d'interfaçage qui comprend par exemple :
- un premier organe de commande 56 pour contrôler un pas de pales 12 d'un rotor principal 98, tel qu'un manche cyclique usuel et
- un deuxième organe de commande 58 pour contrôler ledit pas des pales 12 du rotor principal 98 différemment que le premier organe de commande 56, tel qu'un levier de pas collectif usuel,
- et un troisième organe de commande 57, par exemple un palonnier, pour piloter un pas de pales 13 d'un rotor annexe 99.

La figure 1 illustre des organes de commande reliés à un unique connecteur, mais une ou des interfaces peuvent être reliées à plusieurs connecteurs d'un même sous-ensemble de connecteurs. Par exemple, le deuxième ensemble de connecteurs 25 peut comprendre un sous-ensemble ayant plusieurs connecteurs 26 et le premier ensemble de connecteurs 20 peut comprendre un sous-ensemble ayant plusieurs connecteurs 23 au lieu de l'unique connecteur 23 et de l'unique connecteur 26 représentés sur l'exemple de la figure 2, le premier organe de commande 56 d'un jeu d'interfaçage homme-machine complet pouvant être branché à plusieurs connecteurs 26 et le premier organe de commande 56 de l'autre jeu d'interfaçage homme-machine complet pouvant être branché à plusieurs connecteurs 23.

Dans la configuration bi-pilote CONF1, chaque jeu d'interfaçage homme-machine complet 45 peut être muni d'un interrupteur 94 inhibant le jeu d'interfaçage homme-machine complet 45 correspondant en cas d'activation de cet interrupteur 94.

Par exemple, l'interrupteur 94 est porté par un organe 50 de commande et relié au boitier 51 de commande de cet organe 50 de commande. Lorsque l'interrupteur 94 est activé, le boitier 51 de commande associé transmet un signal au système 70 de contrôle indiquant que le jeu d'interface homme-machine 45 dans son intégralité doit être ignoré.

Dans la configuration bi-pilote CONF1, au moins deux organes de commande 56 ; 57 ; 58 exerçant de fait la même fonction équipent respectivement les deux jeux d'interfaçage homme-machine complets 45. Ainsi, les deux jeux d'interfaçage homme-machine complets 45 de la figure 2 ont deux premiers organes de commande 56 identiques, deux deuxièmes organes de commande 58 identiques et deux troisièmes organes de commande 57 identiques.

Eventuellement, deux organes 50 de commande identiques des deux jeux d'interfaçage homme-machine complets 45 sont des organes passifs avec retour dans une position prédéterminée en l'absence d'effort. De plus, le système 70 de contrôle est configuré pour inhiber un des deux organes de commande 56 ; 57 ; 58, à savoir pour ne pas le prendre en compte, si les deux organes de commande 56 ; 57; 58 sont manœuvrés en même temps.

Eventuellement, deux organes 50 de commande identiques des deux jeux d'interfaçage homme-machine complets 45 sont des organes actifs, à savoir munis chacun d'au moins un dispositif actif tel un vérin ou un moteur apte à exercer un effort sur l'organe 50 de commande. Dès lors, lorsqu'un des deux organes de commande 56 ; 57 ; 58 est déplacé alors le système 70 de contrôle, et par exemple le sous-ensemble de traitement 75, est configuré pour transmettre un signal vers l'autre organe de commande 56; 57; 58 pour commander un déplacement identique.

Par ailleurs, dans une configuration simplifiée CONF2, CONF3, un seul jeu d'interfaçage homme-machine complet 45 est raccordé soit au premier ensemble de connecteurs 20 soit au deuxième ensemble de connecteurs 25.

Le figure 3 illustre une configuration simplifiée prenant la forme d'une configuration intermédiaire CONF2. Dans cette configuration intermédiaire CONF2, le giravion 1 comporte un jeu d'interfaçage homme-machine complet 45 raccordé à un des premier ensemble de connecteurs 20 et deuxième ensemble de connecteurs 25, et un jeu d'interfaçage homme-machine simplifié 46 raccordé à l'autre ensemble de connecteurs 20,25. Le jeu d'interfaçage homme-machine simplifié 46 comprend uniquement un organe de commande 59, par exemple apte à piloter le giravion 1 selon quatre axes.

Ainsi, le système 70 de contrôle, et en particulier le sous-ensemble de traitement 75, applique au moins une première loi pour générer une consigne lorsqu'un des organes 50 de commande du jeu d'interfaçage homme-machine complet 45 est manœuvré, et au moins une deuxième loi lorsque l'unique organe de commande 59 du jeu d'interfaçage homme-machine simplifié 46 est manœuvré.

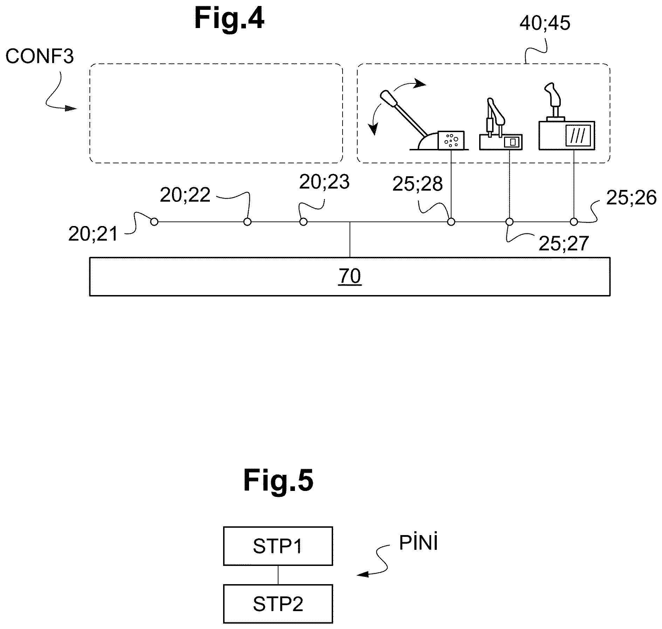

Le figure 4 illustre une configuration simplifiée prenant la forme d'une configuration strictement mono-pilote CONF3.

Dans cette configuration strictement mono-pilote CONF3 le giravion 1 comporte uniquement un jeu d'interfaçage homme-machine complet 45 branché, directement ou indirectement via au moins une liaison d'adaptation, au premier ensemble de connecteurs 20 ou au deuxième ensemble de connecteurs 25.

Dans ces conditions, la figure 5 illustre un procédé de contrôle d'un tel giravion 1.

Le procédé comporte une connexion, durant une étape STP1, d'au moins un jeu d'interfaçage homme-machine à un des premier ensemble de connecteurs 20 et deuxième ensemble de connecteurs 25. Un opérateur connecte au moins un jeu d'interfaçage homme-machine 45 pour placer le giravion dans une des configurations de référence précitées.

Dès lors, le procédé comporte une identification, durant une étape STP2 et avec le système 70 de contrôle, lors d'une phase d'initialisation PINI, de la configuration courante, par exemple à l'aide d'une méthode d'adressage usuelle.

Le procédé comporte alors le contrôle du giravion 1, en contrôlant le déplacement d'au moins une gouverne aérodynamique 11 avec le système 70 de contrôle en fonction de la sollicitation d'un organe 50 de commande.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Giravion (1) comportant un système (10) de commande de vol électrique, le système (10) de commande de vol électrique comprenant un système (70) de contrôle pour contrôler au moins une gouverne aérodynamique (11) en fonction d'au moins une commande,
**caractérisé en ce que** le système (10) de commande de vol électrique comporte un premier ensemble de connecteurs (20) et un deuxième ensemble de connecteurs (25) raccordés au système (70) de contrôle par au moins une liaison filaire, au moins un jeu d'interfaçage homme-machine (40) étant branché de manière réversible soit au premier ensemble de connecteurs soit au deuxième ensemble de connecteurs, le jeu d'interfaçage homme-machine (40) comprenant au moins un organe (50) de commande muni d'un boitier (51) de commande configuré pour générer ladite commande suite à une sollicitation de l'organe (50) de commande; ledit giravion (1) ayant durant chaque vol une configuration courante choisie parmi plusieurs configurations (CONF1, CONF2, CONF3) de référence ; le système de contrôle déterminant, lors d'une phase d'initialisation (PINI), la configuration courante parmi les configurations (CONF1, CONF2, CONF3) de référence en communiquant au travers du premier ensemble de connecteurs (20) et du deuxième ensemble de connecteurs (25), lesdites plusieurs configurations de référence comprenant:
- une configuration bi-pilote (CONF1) dans laquelle deux jeux d'interfaçage homme-machine complets (45) identiques sont branchés respectivement au premier ensemble de connecteurs (20) et au deuxième ensemble de connecteurs (25), et
- au moins une configuration simplifiée (CONF2, CONF3) dans laquelle un seul jeu d'interfaçage homme-machine complet (45) est branché à un des premier ensemble de connecteurs (20) et deuxième ensemble de connecteurs (25).

2. Giravion selon la revendication 1,
**caractérisé en ce que** le ou les jeux d'interfaçage homme-machine complets (45) comprennent chacun un premier organe de commande (56) pour contrôler un pas de pales d'un rotor principal (98), ainsi qu'un deuxième organe de commande (58) pour contrôler ledit pas des pales du rotor principal (98) différemment que le premier organe de commande (56) et un troisième organe de commande (57) pour piloter un pas de pales d'un rotor annexe (99).

3. Giravion selon l'une quelconque des revendications 1 à 2,
**caractérisé en ce que** ladite au moins une configuration simplifiée comporte une configuration strictement mono-pilote (CONF3) comprenant uniquement un jeu d'interfaçage homme-machine complet (45) branché au premier ensemble de connecteurs (20) ou au deuxième ensemble de connecteurs (25).

4. Giravion selon l'une quelconque des revendications 1 à 3,
**caractérisé en ce que** ladite au moins une configuration simplifiée comporte une configuration intermédiaire (CONF2) ayant un jeu d'interfaçage homme-machine complet (45) branché à un des premier ensemble de connecteurs (20) et deuxième ensemble de connecteurs (25), et un jeu d'interfaçage homme-machine simplifié (46) branché au premier ensemble de connecteurs (20) ou au deuxième ensemble de connecteurs (25) qui n'est pas branché au jeu d'interfaçage homme-machine complet (45).

5. Giravion selon la revendication 4,
**caractérisé en ce que** le jeu d'interfaçage homme-machine simplifié (46) comprend uniquement un organe de commande (59).

6. Giravion selon l'une quelconque des revendications 1 à 5,
**caractérisé en ce que** le système (70) de contrôle comprend un sous-ensemble de traitement (75) déterminant au moins une consigne positionnelle à atteindre par au moins une gouverne aérodynamique (11) en fonction au moins d'une commande, le système de contrôle comprenant au moins un sous-ensemble d'actionnement (80) configuré pour générer en fonction de ladite consigne positionnelle au moins une consigne d'actionnement qui est transmise à au moins un actionneur (90) pour piloter une gouverne aérodynamique (11), le sous-ensemble de traitement (75) étant relié au premier ensemble de connecteurs (20) et au deuxième ensemble de connecteurs (25) et étant configuré pour déterminer la configuration courante en fonction d'informations reçues par chaque connecteur des premier ensemble de connecteurs (20) et deuxième ensemble de connecteurs (25).

7. Giravion selon l'une quelconque des revendications 1 à 6,
**caractérisé en ce que** ledit giravion (1) comporte un afficheur (95), le système (70) de contrôle étant configuré pour transmettre au moins un signal porteur de la configuration courante directement ou indirectement à l'afficheur (95), ledit afficheur (95) affichant au moins un symbole (96) porteur de la configuration courante.

8. Giravion selon l'une quelconque des revendications 1 à 7,
**caractérisé en ce que** dans la configuration bi-pilote (CONF1), chaque jeu d'interfaçage homme-machine complet (45) comporte un interrupteur (94), ledit interrupteur (94) inhibant le jeu d'interfaçage homme-machine complet (45) en cas d'activation de cet interrupteur (94).

9. Giravion selon l'une quelconque des revendications 1 à 8,
**caractérisé en ce que** dans la configuration bi-pilote (CONF1), deux organes de commande (56 ; 57 ; 58) exerçant la même fonction respectivement des deux jeux d'interfaçage homme-machine complets (45) sont des organes passifs avec retour dans une position prédéterminée en l'absence d'effort, le système (70) de contrôle étant configuré pour inhiber un des deux organes de commande (56 ; 57; 58) si les deux organes de commande (56 ; 57; 58) sont manœuvrés en même temps.

10. Giravion selon l'une quelconque des revendications 1 à 8,
**caractérisé en ce que** dans la configuration bi-pilote (CONF1), deux organes de commande (56 ; 57 ; 58) exerçant la même fonction respectivement des deux jeux d'interfaçage homme-machine complets (45) sont des organes actifs ; et **en ce que** lorsqu'un des deux organes de commande (56 ; 57; 58) est déplacé alors le système (70) de contrôle est configuré pour transmettre un signal vers l'autre organe de commande pour commander un déplacement identique.

11. Giravion selon l'une quelconque des revendications 1 à 10,
**caractérisé en ce que** le premier ensemble de connecteurs (20) et le deuxième ensemble de connecteurs (25) sont situés latéralement de part et d'autre d'un plan vertical (100) allant d'un nez (3) vers une queue (4) du giravion (1).

12. Giravion selon l'une quelconque des revendications 1 à 11,
**caractérisé en ce que** le boitier (51) de commande est raccordé par au moins une liaison filaire à au moins un connecteur (21-23, 24-26) soit du premier ensemble de connecteurs soit du deuxième ensemble de connecteurs qui a pour fonction d'acquérir ladite au moins une commande et de la transmettre au système (70) de contrôle.

13. Procédé de contrôle d'un giravion (1) comportant un système (10) de commande de vol électrique, le système (10) de commande de vol électrique comprenant un système (70) de contrôle pour contrôler au moins une gouverne aérodynamique (11) en fonction d'au moins une commande,
**caractérisé en ce que**, le système (10) de commande de vol électrique comportant un premier ensemble de connecteurs (20) et un deuxième ensemble de connecteurs (25) reliés au système (70) de contrôle par au moins une liaison filaire, le procédé comporte :
- connexion (STP1) d'un seul jeu d'interfaçage homme-machine au premier ensemble de connecteurs (20) ou au deuxième ensemble de connecteurs (25), ou de deux jeux d'interfaçage homme-machine respectivement au premier ensemble de connecteurs (20) et au deuxième ensemble de connecteurs (25)
- identification (STP2) avec le système (70) de contrôle, lors d'une phase d'initialisation (PINI), d'une configuration courante parmi plusieurs configurations de référence en communiquant avec le premier ensemble de connecteurs (20) et le deuxième ensemble de connecteurs (25), lesdites plusieurs configurations de référence comprenant:
- une configuration bi-pilote (CONF1) dans laquelle deux jeux d'interfaçage homme-machine complets identiques sont branchés respectivement au premier ensemble de connecteurs et au deuxième ensemble de connecteurs, et
- au moins une configuration simplifiée (CONF2, CONF3) dans laquelle un seul jeu d'interfaçage homme-machine complet est branché à un des premier ensemble de connecteurs (20) et deuxième ensemble de connecteurs (25).

14. Procédé selon la revendication 13,
**caractérisé en ce que** ladite au moins une configuration simplifiée comporte une configuration strictement mono-pilote (CONF3) comprenant uniquement un jeu d'interfaçage homme-machine complet (45) branché soit au premier ensemble de connecteurs (20) soit au deuxième ensemble de connecteurs (25).

15. Procédé selon l'une quelconque des revendications 13 à 14,
**caractérisé en ce que** ladite au moins une configuration simplifiée comporte une configuration intermédiaire (CONF2) ayant un jeu d'interfaçage homme-machine complet branché à un des premier ensemble de connecteurs (20) et deuxième ensemble de connecteurs (25), et un jeu d'interfaçage homme-machine simplifié (46) branché au premier ensemble de connecteurs (20) ou au deuxième ensemble de connecteurs (25) qui n'est pas branché au jeu d'interfaçage homme-machine complet (45).
